# EUROPEAN PATENT APPLICATION

(11) **EP 3 738 989 A1**
(43) Date of publication of application: **18.11.2020**
(21) Application number: 19175059.5
(22) Date of filing: 17.05.2019
(51) Int. Cl.: C08G 18/08, C08G 18/12, C08G 18/22, C08G 18/32, C08G 18/40, C08G 18/42, C08G 18/48, C08G 18/66, C08G 18/73, C08G 18/75

(54) **SIZING AGENT COMPRISING A POLYURETHANE POLYMER**

(71) Applicant: Henkel AG & Co. KGaA, 40589 Düsseldorf (DE)
(72) Inventor: Keller, Hannes, 40227 Düsseldorf (DE); Taden, Andreas, 40597 Düsseldorf (DE); Tenhaef, Ursula, 40627 Düsseldorf (DE)

(57) **Abstract**

The present invention relates to a polyurethane sizing agent comprising a polyurethane polymer having a melting point of more than 50 °C as well as to a fiber impregnated or coated with the inventive sizing agent.

## Description

The present invention relates to a polyurethane sizing agent comprising a polyurethane polymer which has a melting point of more than 50 °C as well as to a fiber impregnated or coated with the inventive sizing agent.

Fibrous materials are well-known to the person skilled in the art and find a brought range of applications in all fields of industry. Fibrous materials are subjected to several steps of action during weaving, such as cyclic strain, flexing, abrasion at various loom parts and inter yarn friction. In order to increase the wearability of the fibrous material, in particular to reduce the breakage of the yarn, the fibrous material can be coated or impregnated with a number of substances, so called sizing agents, such as modified starch, polyvinyl alcohol, carboxymethyl cellulose, acrylates or wax. Depending on the adhesion between fiber and sizing agent, the strength of the yarn, in particular the abrasion resistance, can be improved and the hairiness of the yard decreased.

WO 2006/010408 relates to a bonding agent system comprising at least components (A) and (B), where (A) is a compound with at least two cyclic carbonate groups or a mixture of two or more compounds with at least two cyclic carbonate groups and (B) is a compound with at least two (-NHR-) atom groups or a mixture of two or more compounds with at least two (-NHR-) atom groups where R = H, alkyl or aryl. The bonding system is especially suitable for use as two-component adhesive or sealant and is characterized by very good adhesion to various substrates.

EP 3 150 648 relates to a process for manufacturing an aqueous polyurethane dispersion (PUD) which can be used as a coating comprising at least one diene-functionalized polyurethane and at least one dienophile-functionalized polyurethane, the process comprising (1)(a) providing a first NCO-functional polyurethane prepolymer and reacting said first NCO-functional polyurethane prepolymer with a compound comprising at least one NCO-reactive group and at least one diene group to obtain a diene-functionalized polyurethane; or (1)(b) reacting a first polyisocyanate with a compound comprising at least two NCO-reactive groups and at least one diene group to obtain a diene-functionalized polyurethane; (2) dispersing said diene-functionalized polyurethane into a continuous aqueous phase to form a diene-functionalized polyurethane dispersion; (3)(a) providing a second NCO-functional polyurethane prepolymer and reacting said second NCO-functional polyurethane prepolymer with a compound comprising at least one NCO-reactive group and at least one dienophile group to obtain a dienophile-functionalized polyurethane; or (3)(b) reacting a second polyisocyanate with a compound comprising at least two NCO-reactive groups and at least one dienophile group to obtain a dienophile-functionalized polyurethane; (4) dispersing said dienophile-functionalized polyurethane into a continuous aqueous phase to form a dienophile-functionalized polyurethane dispersion; and (5) combining the diene-functionalized polyurethane dispersion and the dienophile-functionalized polyurethane dispersion, thereby forming the aqueous polyurethane polymer dispersion.

EP 3 009 460 relates to aqueous peptide-stabilized polyurethane dispersions that can be used in various applications including adhesives and coatings, as they are surfactant and solvent free and have low VOC emissions. As hybrid materials, they provide for a versatile system that can be finely tuned and combine the advantageous properties of polyurethane and peptide materials. Also encompassed are processes for their production including dispersing an NCO-terminated polyurethane prepolymer into a continuous aqueous phase comprising one or more peptides, thereby forming peptide-stabilized polyurethane particles, compositions containing them and their use in cosmetics and adhesives.

WO 2013/017434 relates to pre-impregnated yarn made of a bundle of reinforcement fiber filaments, wherein the reinforcement fiber filaments are impregnated with 0.1 to 2 wt.-% of a first resin composition infiltrated in the pre-impregnated yarn and are at least partially connected via the first resin composition and wherein the first resin composition comprises at least two bisphenol A epichlorohydrin resins H1 and H2 in a weight ratio H1:H2 of 1.1 to 1.4, wherein H1 is solid at room temperature and H2 is liquid at room temperature, and wherein the first resin composition further comprises an aromatic polyhydroxyether P1 having an acid count of 40 to 55 mg KOH/g and an average molecular weight MN of 4,000 to 5,000 g/mol. The pre-impregnated yarn has a second resin composition on the outside of the bundle in the form of adhesive particles or drops, which composition is solid at room temperature, has a melting temperature in the range of 80 to 150°C and is present on the outside of the bundle in a concentration of 0.5 to 10 wt.-%, wherein at least 50% of the surface of the outside of the bundle and the interior of the bundle is free of the second resin composition.

Although a number of suitable sizing agents are known in the state of the art, most of them have to be removed after the fibrous material is processed. In light of sustainability it would be desirous to preserve the sizing agent in order to limit production of industrial waste. It would in particular be desirous if the use of the sizing agent would not be limited to improving the properties of the fibrous materials but could also advantageously be employed to improve the properties of the processed fibrous materials, for example for additional adhesion or stability.

It is therefore an object of the present invention to provide a sizing agent which not only improves the properties of the coated fibrous material but also serves as a binder in articles obtained from the fibrous material, such as mats or composites, thereby eliminating the need for external binders. It was surprisingly found that the object of the present invention is solved by a sizing agent comprising a polyurethane polymer which is obtained from a reaction mixture comprising a semi-crystalline polyesterpolyol and an NCO-terminated compound wherein the polymer has a melting point of more than 50 °C. It turned out that such a sizing agent crystallizes at room temperature, providing a stable coating to fibrous materials. However, after melting, the inventive sizing agent provides tackiness and adhesive properties and can act as a binder in the later product.

A first object of the present invention is therefore a polyurethane sizing agent comprising a polyurethane polymer which is obtained from a reaction mixture comprising
a. 3 to 80 wt.-% of a semi-crystalline polyesterpolyol and
b. 5 to 25 wt.-% of an NCO-terminated compound,
wherein the polymer has a melting point of more than 50 °C, determined by DSC according to ISO 11357.

Semi-crystalline as referred to in the present invention refers to polyesterpolyols having a crystallinity of at least 20%, preferably at least 35% and more preferably at least 50%, but less than 90% as determined by differential scanning calorimetry (DSC) according to ISO 11357. A semi-crystalline polyesterpolyol in accordance with the present invention comprises crystalline and non-crystalline, i.e. amorphous, regions.

Usually, sizing agents are used for coating fibrous material which is further processed, for example in preforming processes in the production of composite materials where the coated fibrous material is woven to mats and placed in a mold before a binder is added. It was surprisingly found that the addition of a binder can be omitted when the inventive sizing agent is used which exhibits binder properties when melted. However, to ensure satisfactory processing of the coated fibrous material, the melting point of the inventive sizing agent is chosen to be higher than the temperatures the fibrous material is exposed to during processing. On the other hand, the melting point of the sizing agent should not be too high to still be suitable to be employed in general preforming processes. The melting temperature of the inventive sizing agent is determined by the melting point of the comprised polymer. The polymer contained in the inventive sizing agent is therefore specifically chosen to have a melting point which allows the inventive sizing agent to meet the above requirements. In a preferred embodiment, the polymer contained in the inventive sizing agent therefore has a melting point of more than 60 °C, preferably more than 70 °C, in particular from 50 to 80 °C, determined by DSC according to ISO 11357, respectively.

The polymer contained in the inventive sizing agent is obtained by reaction of a semi-crystalline polyesterpolyol and an NCO-terminated compound. It was surprisingly found that processability of the inventive sizing agent could be improved if the molecular weight of this polymer was contained within a certain range. In a preferred embodiment, the polymer obtained by reaction of a semi-crystalline polyesterpolyol and an NCO-terminated compound therefore has a number average molecular weight Mn of 2500 to 15000 g/mol, preferably 3000 to 12000 g/mol.

In order to promote and balance the different properties of the sizing agent, i.e. common sizing properties and binder properties, it was found to be advantageous if the semi-crystalline polyesterpolyol possessed certain properties. In a preferred embodiment, the semi-crystalline polyesterpolyol has a number average molecular weight Mn of 400 to 5000 g/mol, preferably 500 to 3000 g/mol.

In a further preferred embodiment, the semi-crystalline polyesterpolyol has a crystallinity from 20 to 80%, preferably 35 to 70%, determined by DSC according to ISO 11357. It was surprisingly found that in particular the adhesive properties of the sizing agent could be improved by employing a semi-crystalline polyesterpolyol having a crystallinity in the defined range.

The NCO-terminated compound used in the reaction of the polyurethane polymer may be chosen according to need. However, it was found to be advantageous if an aliphatic diisocyanate was employed as the NCO-terminated compound. In a preferred embodiment of the inventive sizing agent, the NCO-terminated compound is therefore an aliphatic diisocyante. Among particular preferred diisocyanates are isophorone diisocyanate, hexamethylene diisocyanate and mixtures thereof.

If reference is made herein to a molecular weight, this reference refers to the average number molecular weight Mn, if not explicitly stated otherwise. The number average molecular weight Mn can be calculated based on end group analysis via OH numbers according to DIN 53240-1:2013-06 or NCO numbers, in the present invention referred to as OH group titration and as NCO group titration as well, or can be determined by gel permeation chromatography according to DIN 55672-1:2007-08 with THF as the eluent. If not stated otherwise, all given molecular weights are those determined by gel permeation chromatography. The weight average molecular weight Mw can be determined by GPC, as described for Mn.

In a preferred embodiment, the reaction mixture from which the polyurethane sizing agent according to the invention is obtained further comprises an amorphous polyol. The amorphous polyol may be an amorphous polyetherpolyol or an amorphous polyesterpolyol, however, preferably the amorphous polyol which is present in the reaction mixture in addition to the semi-crystalline polyesterpolyol is an amorphous polyetherpolyol. The amorphous polyol preferably has a crystallinity of less than 2%, determined by DSC according to ISO 11357.

In order to further adjust the properties of the polymer, and in turn the properties of the inventive sizing agent, the polymer may be further be reacted with a chain extender. In a preferred embodiment, the polymer is therefore preferably further reacted with a chain extender. Preferably, the polyurethane polymer is obtained
- from a reaction mixture comprising a) 3 to 80 wt.-% of a semi-crystalline polyesterpolyol and b) 5 to 25 wt.-% of an NCO-terminated compound, and preferably c) an amorphous polyol, more preferable an amorphous polyetherpolyol, wherein this reaction product preferably has a number average molecular weight Mn of 2500 to 15000 g/mol, preferably 3000 to 12000 g/mol
- and this reaction product is in a second step reacted with a chain extender.

The chain extender is preferably selected from amines. Preferred amines have a functionality of at least 2 and a molecular weight up to 3000 g/mol, especially preferred up to 1000 g/mol, more preferably between 60 and 500 g/mol. More preferably the chain extender is selected from the group consisting of diamines, triamines and tetraamines as well as mixtures thereof. Among especially preferred chain extenders are ethylene diamine, piperazine, isophoron diamine, diethylene triamine, triethylene tetramine and mixtures thereof. More preferably, the chain extender is selected from the group consisting of diamines, triamines as well as mixtures thereof, especially the chain extender is a combination of a diamine and a triamine. The chain extender increase the molecular weight of the polyurethane polymer and thus improve its mechanical properties, especially in the case of amines as chain extenders. The preferred amines, but especially the combination of di- and trifunctional amines balance flexibility with stiffness (crosslinking) of the resulting product.

The inventive polyurethane sizing agent is preferably in the form of an aqueous dispersion. It was surprisingly found that the workability of the inventive sizing agent was particularly favorable if the solid content of the aqueous dispersion did not exceed 35 wt.-%, based on the total weight of the aqueous dispersion. In a preferred embodiment, the inventive sizing agent is therefore in the form of an aqueous dispersion with a solid content of 0.5 to 35 wt.-%, preferably 3 to 20 wt.-%, based on the total weight of the aqueous dispersion, respectively.

The inventive sizing agent is in particular suitable for coating fibrous material. A further object of the present invention is therefore a fiber or a fibrous material impregnated and/or coated with a polyurethane sizing agent according to the invention. It was surprisingly found that the coating/impregnation of the fiber or the fibrous material with the inventive sizing agent allows the elimination of an additional step in the process of composite preparation, i.e. the addition of an external binder to afford adhesion between lay-ups. In contrast, due to the favorable melting properties of the inventive sizing agent, the sizing agent will provide the necessary adhesion and fill the role of the external binder.

In a preferred embodiment, the weight of the amount of sizing agent used for coating/impregnating the inventive fiber or fibrous material is below 7 wt.-%, based on the total weight of the fiber or fibrous material, respectively. It was surprisingly found that only small amounts of sizing agent are needed to provide the necessary binding effect. In a preferred embodiment, the amount of sizing agent is therefore 0.1 to 10 wt.-%, preferably 0.3 to 3 wt.-%, based on the total weight of the fiber or fibrous material, respectively.

The inventive sizing agent can be applied to a number of fibers and fibrous materials. However, in a preferred embodiment, the fiber or fibrous material is selected from the group consisting of carbon fibers, glass fibers, synthetic fibers, boron fibers, ceramic fibers, metal fibers, natural fibers and combinations thereof. It was surprisingly found that the inventive sizing agent is particular suitable to be used together with carbon fibers. In a preferred embodiment, the inventive fiber is therefor a carbon fiber. In an especially preferred embodiment, the inventive fibrous material is made of carbon fibers.

The inventive fiber and fibrous material are especially suitable for the production of light-weight parts, as for example used in the automotive or aerospace industry. A further object of the present invention is therefore the use of a fiber or fibrous material according to the invention for the production of light-weight parts, in particular in the automotive industry.

Another embodiment of this invention is the use of the above described polyurethane polymer as sizing agent for impregnation and/or coating of fibers or fibrous materials, as mentioned above.

The invention will be illustrated in more detail with reference to the following examples which by no means are to be understood as limiting the scope and spirit of the invention.

### Example

### Preparation of polyurethane polymer

The number average molecular weight of the employed components was determined by GPC or OH titration.

A semi-crystalline copolyester having a number average molecular weight of 3500 g/mol, a amorphous polyetherpolyol having a number average molecular weight of 2000 g/mol and a copolyol having a number average molecular weight of 2000 g/mol were heated to a bath temperature of 90 °C and kept under vacuum for 1.5 hours. The reaction mixture was then cooled, and 1,4-butane diol and the NCO-terminated compound were added. The reaction was initialized by addition of a catalyst on the basis of a bismuth organometallic compound. Once a NCO-value of 1.69% was reached, the reaction was terminated. Then the polyurethane mixture was dissolved in dry acetone (1:1 by wt. The polyurethane mixture in acetone was stirred in water and a mixture of a low molecular diamine and a low molecular triamine was added as chain extender. After removing the acetone the reaction mixture was stirred for 1 day at room temperature and then filtered to obtain the polyurethane dispersion.

The melting point of the dried polyurethane polymer is determined using a TA instruments Q 2000 DSC unit. The DSC is calibrated using an Indium standard. 6 to 8 mg of sample is weighed into an aluminum DSC pan and the lid fixed securely. The temperature of the DSC chamber is set to 5 °C prior to use. The sample pan and reference pan (blank) are placed into the DSC chamber. The temperature is increased to 120 °C at a heating rate of 2 °C per minute. The temperature is held at 150 °C for 5 min and then decreased to -80 °C at a cooling rate of 2 °C per minute. The temperature is then increased to 120 °C at a heating rate of 2 °C per minute (second heating cycle). The melting point of the polymer is obtained from an endothermic peak in the heat flow of the second heating cycle.

### Preparation of polyurethane sizing agent

The polymer was dispersed in water to obtain an aqueous dispersion having a solid content of 8 wt.-%, based on the total weight of the aqueous dispersion. Carbon fiber layings were soaked in the dispersion and then dried. The dried layings were used to prepare test specimen by stacking four layers of the layings together and pressing the same at a pressure of 150 kN and a temperature of 80°C. The obtained test specimen were attached to a base plate in a way that 9 cm of the test specimen extended beyond the edge of the base plate. The assembly was heated to temperatures from 30 °C to 100 °C and the angle between the extension of the specimen and the base plate was observed after 20 minutes. Even at temperatures of 100 °C no bending of the specimen was observed, showing the dimensional stability of the specimen provided by the inventive sizing agent.

The test was then repeated using dispersions having solid contents of 5.75 wt.-%, 4 wt.-% 2.3 wt.-% and 0.85 wt.-%, based on the total weight of the aqueous dispersion, respectively. Specimen were prepared and attached to a base plate as described above and the assemblies heated to temperatures of 30 to 100 °C. Afterwards the assemblies have been dimensionally stable, even using highly diluted dispersions.

## Claims

1. Polyurethane sizing agent comprising a polyurethane polymer, the polyurethane polymer being obtained from a reaction mixture comprising:
a. 3 to 80 wt.-% of a semi-crystalline polyesterpolyol and
b. 5 to 25 wt.-% of a NCO-terminated compound,
**characterized in that** the polyurethane polymer has a melting point of more than 50 °C, determined by DSC according to ISO 11357.

2. Polyurethane sizing agent according to claim 1, **characterized in that** the polyurethane polymer has a melting point of more than 60 °C, preferably more than 70 °C, in particular from 50 to 80 °C, determined by DSC according to ISO 11357, respectively.

3. Polyurethane sizing agent according to one or more of the forgoing claims, **characterized in that** the reaction product of the semi-crystalline polyesterpolyol and the NCO-terminated compound has a number average molecular weight Mn of 2500 to 15000 g/mol, preferably 3000 to 12000 g/mol.

4. Polyurethane sizing agent according to any of the forgoing claims, **characterized in that** the semi-crystalline polyesterpolyol has a number average molecular weight of 400 to 5000 g/mol, preferably 500 to 3000 g/mol.

5. Polyurethane sizing agent according to any of the forgoing claims, **characterized in that** the semi-crystalline polyesterpolyol has a crystallinity from 20 to 80%, determined by DSC according to ISO 11357.

6. Polyurethane sizing agent according to any of the forgoing claims, **characterized in that** the NCO-terminated compound is an aliphatic diisocyanate.

7. Polyurethane sizing agent according to any of the forgoing claims, **characterized in that** the polyurethane polymer is obtained by further reacting the reaction mixture with a chain extender.

8. Polyurethane sizing agent according to claim 7, **characterized in that** the chain extender is selected from the group consisting of diamines and triamines.

9. Polyurethane sizing agent according to any of the forgoing claims, **characterized in that** the reaction mixture further comprises an amorphous polyol, preferably an amorphous polyetherpolyol, having a crystallinity of less than 10%, preferably less than 5%, in particular less than 2%, determined by DSC according to ISO 11357.

10. Polyurethane sizing agent according to any of the forgoing claims, **characterized in that** the agent is in the form of an aqueous dispersion, preferably an aqueous dispersion with a solid content of 0.5 to 35 wt.-%, more preferably 3 to 20 wt.-%, based in the total weight of the aqueous dispersion.

11. Fiber or fibrous material impregnated and/or coated with a polyurethane sizing agent according to any one of claims 1 to 10.

12. Fiber or fibrous material according to claim 11, **characterized in that** the amount of sizing agent is 0.1 to 10 wt.-%, preferably 0.3 to 3 wt.-%, based on the total weight of the fiber or fibrous material, respectively.

13. Fiber according to any of claims 11 and 12, **characterized in that** the fiber is selected from the group consisting of carbon fibers, glass fibers, synthetic fibers, boron fibers, ceramic fibers, metal fibers, natural fibers and combinations thereof, in particular carbon fibers.

14. Use of a fiber or fibrous material according to any of claims 11 to 13 in the production of light-weight parts, in particular in the aerospace or automotive industry.

15. Use of a polyurethane polymer as sizing agent for impregnation and/or coating of fibers or fibrous materials, **characterized in that** the polyurethane polymer being obtained from a reaction mixture comprising:
a. 3 to 80 wt.-% of a semi-crystalline polyesterpolyol and
b. 5 to 25 wt.-% of a NCO-terminated compound,
and the polyurethane polymer having a melting point of more than 50 °C, determined by DSC according to ISO 11357.
